# EUROPEAN PATENT APPLICATION

(11) **EP 0 774 485 A2**
(43) Date of publication of application: **21.05.1997**
(21) Application number: 96118088.2
(22) Date of filing: 12.11.1996
(51) Int. Cl.: C08J 9/30, C08G 18/72, C08G 18/63

(54) **Process of making a flexible polyurethane slab stock foam having superior feel, comfort, and wear characteristics**

(30) Priority: 14.11.1995 US 557216; 14.11.1995 US 557270
(71) Applicant: BASF CORPORATION, Mount Olive, New Jersey 07828-1234 (US)
(72) Inventor: Wujcik, Steven Edward, Romulus, Michigan 48174 (US); Smiecinski, Theodore Michael, Woodhaven, Michigan 48183 (US); Mente, Donald C., Grosse Ile, Michigan 48138 (US)
(74) Representative: Meyer, Udo

(57) **Abstract**

More particularly, the invention relates to a polyurethane slab stock foam characterized by (a.) a cell size distribution wherein at least 20 percent of the cells visible in a cross-section of the foam have a diameter of at least 0.1mm, (b.) a catastrophic fatigue value characterized by (1.) a percent loss in height of no more than 10% and (2.) a percent hardness retained (65 percent IFD deflection) of no less than 50%, and (c.) a substantial absence of cells having a diameter of at least 1mm. The invention further provides a process of making said foam as well as a method of reducing the number of defects in polyurethane foam wherein such defects have an average diameter of at least 1mm.

## Description

The present invention provides a flexible polyurethane slab stock foam having superior feel, comfort, and wear characteristics, a process for making the same, and a method of reducing the number of defects in a polyurethane foam, wherein the defects have a diameter which is at least four times greater than the common cell size.

More particularly, the invention relates to a polyurethane slab stock foam characterized by (a.) a cell size distribution wherein at least 20 percent of the cells visible in a cross-section of the foam have a diameter of at least 0.1 mm, and (b.) a substantial absence of cells having a diameter which is at least four times greater than the common cell size diameter. The foams of the invention are further definable as having a catastrophic fatigue value characterized by (1) a percent loss in height of no more than 10 percent, and (2) a percent hardness retained (65 percent IFD) of no less than 50 percent.

The production of high quality flexible polyurethane slab stock foam has long been a goal of the polyurethane foam industry. Slab stock foam physical attributes are defined under ASTM D3574 and D3770 standard specifications for Flexible Cellular materials including but not limited to conventional, high resilience, and combustion modified high resilience polyurethane foam. Carpet cushion foam standards are specified in but are not limited to HUD UM72a. Foams having optimum levels of feel, comfort and wear characteristics as well as a desirable visual appearance, have been particularly difficult to achieve.

The performance requirements of some end use applications have been especially challenging. For example, carpet cushion has particularly rigorous performance requirements which have been difficult to achieve while maintaining a balance of the other desirable properties.

High quality carpet cushion should have a plush or pleasantly soft feel to the touch. Optimally, those skilled in the art would like a user of the carpet cushion to experience a sinking or floating feeling when walking or resting upon the cushion.

In addition, high quality polyurethane foam carpet cushion must simultaneously exhibit both short term and long term resistance to compression and the results of repeated use. The foam must not "bottom out" or give way under successive every day use.

Also, the carpet cushion must exhibit improved wear characteristics with respect to both itself and the wear of any carpet used thereon. That is, the cushion must serve to improve the long term performance of the carpet and thus must not hasten carpet degradation with undesirable wear of the carpet cushion itself.

Finally, the carpet cushion must be visually appealing to both wholesale and retail consumers. In particular, high quality slab stock polyurethane foams intended for use as carpet cushion must be substantially free from visible defects. Examination of a cross-section of traditional slab stock foam will generally reveal the presence of voids which can be defined in terms of their diameter. The perception of what constitutes a void is to some extent dependent upon the size of the cells which predominate in the foam, i.e. common cell size diameter. Common cell size diameter may be defined as the average diameter of the most prevalent cells which have a diameter which is within + or - 100% of each other. Preferably, the common cell size diameter will be the average diameter of those cells which have a diameter which is within + or - 50% of each other. Most preferably, the common cell size diameter will be the average diameter of the most prevalent cells having a diameter which is within + or - 30% of each other.

For example, in foams having a common cell size of 0.5 mm, cells having a diameter of from 1 mm to 3 mm would generally be viewed as a defect called buckshot, while cells having an average diameter of 3 mm to 6 mm would generally be defined as a peahole defect. In general, a defect may be defined as a void apparent in a cross section of a foam which has a diameter which is at least four times greater than the common cell size diameter. Preferably, the foams of the invention will have a substantial absence of voids having a diameter which is at least three time greater than the common cell size diameter. Most preferably, the foams of the invention will have a substantial absence of voids having a diameter which is twice that of the common cell size diameter. Defects generally arise as a result of the entrapment of air and high viscosity components during the formation of the foam. Air entrained in the urethane components during transfer to and from storage vessels and metering equipment, plus inconsistent processing habits are believed to be possible causes of foam defects.

Thus, it is an object of the instant invention to provide a flexible polyurethane slab stock foam which has superior feel, comfort and wear characteristics and which has a substantial absence of cells having a diameter which is at least four times greater than the common cell size diameter.

It is another object of the invention to provide such foams which also exhibit fatigue values characterized by (1) a percent loss in height of no more than 10 percent and (2) a percent retained (65 percent IFD) of no less than 50 percent.

Finally, it is an object of the invention to provide a process of making such foam as well as a method of reducing the number of defects in polyurethane foam wherein such defects have a diameter which is a least four times greater than the common cell size.

The foregoing object and more are achieved with the flexible polyurethane slabstock foam of the invention. Such foam results from a process of making wherein a stream of an isocyanate containing component is provided, along with a stream of a polyol component having a blowing agent which is responsible for at least 95 percent and preferably, 100 percent, of the expansion of the foam. An amount of an inert gas is injected into one or more of the isocyanate or polyol component streams, the amount of injected gas being capable of producing only negligible expansion of the foam. The isocyanate and polyol component streams are reacted together for a time sufficient to produce a polyurethane foam. The resultant polyurethane slab stock foam is characterized by (a.) a cell size distribution where at least 20 percent of the cells visible in a cross section of the foam have a diameter of at least 0.1 mm, and (b.) a substantial absence of cells having a diameter which is at least four times greater than the common cell size diameter. The resulting foam is further identified by a catastrophic fatigue value characterized by (1) a percent loss in height of no more than 10 percent and (2) a percent retained (65 percent IFD) of no less than 50 percent.

The invention also provides a method of reducing the number of defects in polyurethane foam wherein the defects have a diameter which is at least four times greater than the common cell size diameter. The method involves the provision of a stream of an isocyanate containing component, and the provision of a stream of a polyol component having a blowing agent which is responsible for at least 95 percent of the expansion of the foam. An amount of inert gas is injected into one or more of the isocyanate or polyol component streams, the amount injected being capable of producing only negligible expansion of the foam. The streams are reacted together for a time sufficient to produce a polyurethane foam.

The flexible polyurethane slab stock foam of the invention exhibits superior feel, comfort and wear characteristics. It is obtained from a particular process of making which requires the injection of an amount of inert gas into one or more isocyanate or polyol component steams. The amount of inert gas injected is capable of producing only negligible, if any, expansion of the foam.

The stream of an isocyanate containing component will generally be comprised of one or more organic isocyanates. Organic polyisocyanates suitable for use in the instant invention correspond to the formula R' (NCO)z wherein R' is a polyvalent organic radical which is either aliphatic, arylalkyl, alkylaryl, aromatic or mixtures thereof and z is an integer which corresponds to the valence of R' and is at least 2.

Representative of the types of organic polyisocyanates contemplated herein include, for example, 1,2-diisocyanatoethane, 1,3-diisocyanatopropane, 1,2-diisocyanatopropane, 1,4-diisocyanatobutane, 1,5-diisocyanatopentane, 1,6-diisocyanatohexane, bis(3-isocyanatopropyl)ether, bis(3-isocyanatopropyl)sulfide, 1,7-diisocyanatoheptane, 1,5-diisocyanato-2,2-dimethylpentane, 1,6-diisocyanate-3-methoxyhexane, 1,8-diisocyanatoctane, 1,5-diisocyanato-2,2,4-trimethylpentane, 1,9-diisocyanatononame, 1,10-diisocyanatopropyl ether of 1,4-butylene glycol, 1,11-diisocyanatoundecane, 1,12-diisocyanatododecane, bis(isocyanatohexyl)sulfide, ,4-diisocyanatobenze, 1,3-diisocyanato-o-xylene, 1,3-diisocyanato-p-xylene, 1,3-diisocyanato-m-xylene, 2,4-diisocyanto-1-chlorobenzene, 2,4-diisocyanato-1-nitro-benzene, 2,5-diisocyanato-1-nitrobenzene, m-phenylene diisocyanate, 2,4-toluene diisocyanate, 2,6-toluene diisocyanate, mixtures of 2,4- and 2,6-toluene diisocyanate, 1,6-hexamethylene diisocyanate, 1,4-tetramethylene diisocyanate, 1,4-cyclohexane diisocyanate,hexahydrotoluene diisocyanate, 1,5-naphthalene diisocyanate, 1-methoxy-2,4-phenylene diisocyanate, 4,4'-cyclohexane diisocyanate, hexahydrotoluene diisocyanate, 1,5-naphthalene diisocyanate, 1-methoxy-2,4-phenylene diisocyanate, 2,4'-4,4'-diphenylmethane diisocyanate, 4,4'-biphenylene diisocyanate, 3,3'-dimethyl-4,4'-diphenylmethane diisocyanate; the triisocyanates such as 4,4',4''-triphenylmethane triisocyanate polymethylene polyphenylene polyisocyanate and 2,4,6-toluene triisocyanate; and the tetraisocyanates such as 4,4'-dimethyl-2,2'-5,5'-diphenylmethane tetraisocyanate.

The polyisocyanates are prepared by conventional methods known in the art such as the phosgenation of the corresponding organic amine or equivalent processes.

Included within the useable isocyanates are the modifications of the above isocyanates which contain carbodiimide, allophonate or isocyanurate structures. Uretonimine-carbodimide derivatives of essentially pure diphenylmethane diisocyanate can be made by well-known techniques, such as the conversion of a portion of the isocyanate groups in diphenylmethane diisocyanate to a carbodiimide by using a phosphorus-containing catalyst at elevated temperatures, and then allowing the carbodiimide modified diphenylmethane diisocyanates to further react with unreacted isocyanates groups to form uretonimine modified MDI. The conversion from carbodiimide modified MDI to uretonimine modified MDI does not typically go to completion, having a composition containing small amounts of carbodiimide groups. Typically from about 10 to 35 percent by weight of the MDI as converted to uretonimine-carbodiimide modified MDI species leaving from 65 to 90 percent of the MDI unreacted.

Prepolymers and quasi-prepolymers may also be employed in the process of the subject invention. These prepolymers quasi-prepolymers are prepared by reacting an excess of organic polyisocyanate or mixtures thereof with a minor amount of an active hydrogen-containing compound as determined by the well-known Zerewitinoff test as described by Kohler in Journal of the American Chemical Society, 49, 3181 (1927). These compounds and their methods of preparation are well known in the art. The use of any one specific active hydrogen compound is not critical hereto, rather any such compound can be employed herein. Generally, the quasi-prepolymers have a free isocyanate content of from 20 percent to 40 percent by weight while prepolymers will have a free isocyanate content of from 2 to 15 percent by weight.

Especially useful due to their availability and properties are toluene diisocyanate, 2,4'-diphenylmethane diisocyanate, 4,4'-diphenylmethane diisocyanate, polymethylene polyphenylene polyisocyanate, modified isocyanates as described above, and mixtures thereof.

However, it has been found that the preferred isocyanate containing component will be comprised of mixtures of diphenylmethane diisocyanate (MDI) isomers, modified isocyanates containing uretoneimine carbodiimide, allophanate and/or isocyanaurate structures, and toluene diisocyanate (TDI).

A preferred MDI isomer is 4,4'-diphenylmethane diisocyanate.

Preferred modified isocyanates will generally have from 5 to 50% carbodiimide, with 10 to 30% being most preferred. While any suitable TDI may be used, such as 2,4-TDI or 2,6-TDI, mixtures containing from about 65 to 85 percent 2,4-TDI and the balance 2,6-TDI are preferred. A particularly preferred isocyanate containing component will comprise from 20 to 95 weight percent 4,4-MDI isomer, 1 to 60 weight percent modified isocyanate, and 1 to 60 weight percent TDI.

The most preferred isocyanate containing component will comprise from 30 to 80 weight percent 4,4'-MDI, 5 to 50 weight percent modified isocyanate, and 5 to 50 percent TDI.

The stream of polyol component may also be termed the resin side or isocyanate reactive component. This component will generally be comprised of a blend of a polyol, a urethane promoting catalyst, a blowing agent, and optionally, one or more additives selected from the group consisting of surfactants, chain extenders, flame inhibitors, antioxidants, and mixtures thereof.

Polyols may be defined as compounds having at least two isocyanate reactive hydrogens which may be employed in the preparation of polyurethane foams and elastomers. They are often prepared by the catalytic condensation of an alkylene oxide or mixture of alkylene oxides either simultaneously or sequentially with an organic compound having at least two active hydrogen atoms, such as evidenced by U.S. Pat. Nos. 1,922,459; 3,190,927; and 3,346,557. Representative polyols include polyhydroxyl-containing polyesters, polyoxyalkylene polyether polyols such as the aforementioned polyoxyalkylene polyether polyols, polyhydroxy-terminated polyurethane polymers, polyhydroxyl-containing phosphorous compounds, and alkylene oxide adducts of polyhydric polythioesters, polyacetals, aliphatic polyols and thiols, ammonia, and amines including aromatic, aliphatic, and heterocyclic amines, as well as mixtures thereof. Alkylene oxide adducts of compounds which contain two or more different groups within the above-defined classes may also be used, for example, amino alcohols which contain an amino groups and a hydroxyl group. Also, alkylene oxide adducts of compounds which contain one SH group and one OH group as well as those which contain an amino groups and an SH group may be used. Generally, the number average molecular weight of the polyols will vary from greater than 400 to 10,000, and preferably from 2500 to 7,000.

Any suitable hydroxy-terminated polyester may be used such as are prepared, for example, from polycarboxylic acids and polyhydric alcohols. Any suitable polycarboxylic acid may be used such as oxalic acid, malonic acid, succinic acid, glutaric acid, adipic acid, pimelic acid, suberic acid, azelaic acid, sebacic acid, brassylic acid, thapsic acid, maleic acid, fumaric acid, glutaconic acid, α-hydromuconic acid, β-hydromuconic acid, α-butyl-α-ethyl-glutaric acid, α,β-diethylsuccinic acid, isophthalic acid, terephthalic acid, hemimellitic acid, and 1,4-cyclohexanedicarboxylic acid. Any suitable polyhydric alcohol, including both aliphatic and aromatic, may be used such as ethylene glycol, propylene glycol, trimethylene glycol, 1,2-butanediol, 1,3-butanediol, 1,4-butanediol, 1,2-pentanediol, 1,4-pentanediol, 1,5-pentanediol, 1,6-hexanediol, 1,7-heptanediol, glycerol, 1,1,1-trimethylolpropane, 1,1,1-trimethylolethane, 1,2,6-hexanetriol, α-methyl glucoside, pentaerythritol, and sorbitol. Also included within the term "polyhydric alcohols" are compounds derived from phenol such as 2,2-bis(4-hydroxylphenyl)propane, commonly known as Bisphenol A. Preferred are diols and triols for the manufacture of flexible polyurethane foams.

The hydroxyl-containing polyester may also be a polyester amide such as is obtained by including some amine or amino alcohol in the reactants for the preparation of the polyesters. Thus, polyester amides may be obtained by condensing an amino alcohol such as ethanolamine with the polycarboxylic acids set forth above or they may be made using the same components that make up the hydroxyl-containing polyester with only a portion of the components being a diamine such as ethylene diamine.

Any suitable polyoxyalkylene polyether polyol may be used such as the polymerization product of an alkylene oxide or a mixture of alkylene oxides with a polyhydric alcohol. Any suitable polyhydric alcohol may be used such as those disclosed above for use in the preparation of the hydroxy-terminated polyesters. Any suitable alkylene oxide may be used such as those disclosed above for preparing the prepolymers. Polyethers which are preferred include the alkylene oxide addition products of trimethylolpropane, glycerine, propylene glycol, dipropylene glycol, and 2,2'-(4,4'-hydroxyphenyl)propane and blends thereof having equivalent weights of from 100 to 7,000.

Suitable polyhydric polythioethers which may be condensed with alkylene oxides include the condensation product of thiodiglycol or the reaction product of a dicarboxylic acid such as is disclosed above for the preparation of the hydroxyl-containing polyesters with any other suitable thioether glycol.

Polyhydroxyl-containing phosphorous compounds which may be used include those compounds disclosed in U.S. Pat. No. 3,639,542. Preferred polyhydroxyl-containing phosphorous compounds are prepared from alkylene oxides and acids of phosphorous having an acid equivalency of from about 72 percent to about 95 percent.

Suitable polyacetals which may be condensed with alkylene oxides include the reaction product of formaldehyde or other suitable aldehyde with a dihydric alcohol or an alkylene oxide such as those disclosed above.

Suitable aliphatic thiols which may be condensed with alkylene oxides include alkanethiols containing at least two -SH groups such as 1,2-ethanedithiol, 1,2-propanedithiol, 1,3-propanedithiol, and 1,6-hexanedithiol; alkene thiols such as 2-butene-1,4-dithiol; and alkyne thiols such as 3-hexyne-1,6-dithiol.

Suitable amines which may be condensed with alkylene oxides include aromatic amines such as aniline, o-chloroaniline, p-aminoaniline, 1,5-diaminonaphthalene, methylene dianiline, the condensation products of aniline and formaldehyde, and 2,3-, 2,6-, 3,4-, 2,5-, and 2,4-diaminotoluene; aliphatic amines such as methylamine, triisopropanolamine, ethylenediamine, 1,3-diaminopropane, 1,3-diaminobutane, and 1,4-diaminobutane.

Also, polyols containing ester groups can be employed in the subject invention. These polyols are prepared by the reaction of an alkylene oxide with an organic dicarboxylic acid anhydride and a compound containing reactive hydrogen atoms. A more comprehensive discussion of these polyols and their method of preparation can be found in U.S. Pat. Nos. 3,585,185; 3,639,541 and 3,639,542.

Polyols containing graft polymer dispersions may also be employed in the invention and are preferred. These are prepared by the in situ polymerization, in the polyols listed below, of an ethylenically unsaturated monomer or a mixture of ethylenically unsaturated monomers. Representative ethylenically unsaturated monomers which may be employed in the present invention include butadiene, isoprene, 1,4-pentadiene, 1,6-hexadiene, 1,7-octadiene, styrene, α-methylstyrene, 2-methylstyrene, 3-methylstyrene and 4-methylstyrene, 2,4-dimethylstyrene, ethylstyrene, isopropylstyrene, butylstyrene, phenylstyrene, cyclohexylstyrene, benzylstyrene, and the like; substitute styrenes such as cyanostyrene, nitrostyrene, N,N-dimethylaminostyrene, acetoxystyrene, methyl 4-vinylbenzoate, phenoxystyrene, p-vinylphenyl oxide, and the like; the acrylic and substituted acrylic monomers such as acrylonitrile, acrylic acid, methacrylic acid, methyl acrylate, 2-hydroxyethyl acrylate, methyl methacrylate, cyclohexyl methacrylate, benzyl methacrylate, isopropyl methacrylate, octyl methacrylate, methacrylonitrile, ethyl α-ethoxyacrylate, methyl α-acetaminoacrylate, butyl acrylate, 2-ethylhexyl acrylate, phenyl acrylate, phenyl methacrylate, N,N-dimethylacrylamide, N,N-dibenzylacrylamide, N-butylacrylamide, methacrylyl formamide, and the like; the vinyl esters, vinyl ethers, vinyl ketones, etc., such as vinyl acetate, vinyl butyrate, isopropenyl acetate, vinyl formate, vinyl acrylate, vinyl methacrylate, vinyl methoxyacetate, vinyl benzoate, vinyltoluene, vinylnaphthalene, vinyl methyl ether, vinyl ethyl ether, vinyl propyl ethers, vinyl butyl ethers, vinyl 2-ethylhexyl ether, vinyl phenyl ether, vinyl 2 methoxyethyl ether, methoxybutadiene, vinyl 2-butoxyethyl ether, 3,4-dihydro-1,2-pyran, 2-butoxy-2'-vinyloxy diethyl ether, vinyl methyl ketone, vinyl ethyl ketone, vinyl phosphonates such as vinyl phenyl ketone, vinyl ethyl sulfone, N-methyl-N-vinyl acetamide, N-vinyl-pyrrolidone, vinyl imidazole, divinyl sulfoxide, divinyl sulfone, sodium vinylsulfonate, methyl vinylsulfonate, N-vinyl pyrrole, and the like; dimethyl fumarate, dimethyl maleate, maleic acid, crotonic acid, fumaric acid, itaconic acid, monomethyl itaconate, t-butylaminoethyl methacrylate, dimehtylaminoethyl methacrylate, glycidyl acrylate, allyl alcohol, glycol monoesters of itaconic acid, vinyl pyridine, and the like. Any of the known polymerizable monomers can be used and the compounds listed above are illustrative and not restrictive of the monomers suitable for use in this invention. Preferably, the monomer is selected from the group consisting of acrylonitrile, styrene and mixtures thereof.

The amount of ethylenically unsaturated monomer employed in the polymerization reaction is generally from 25 percent to 70 percent, preferably from 30 percent to 45 percent, based on the total weight of the product. The polymerization occurs at a temperature between about 25°C. and 180°C., preferably from 80°C. to 135°C.

The unsaturated polyols or macromers which may be employed in preparing the graft polymer dispersion may be prepared by the reaction of any conventional polyol such as those described above with an organic compound having both ethylenic unsaturation and a hydroxyl, carboxyl, anhydride, isocyanate or epoxy group or they may be prepared by employing an organic compound having both ethylenic unsaturation and a hydroxyl, carboxyl, anhydride, or epoxy group as a reactant in the preparation of the conventional polyol. Representative of such organic compounds include unsaturated mono- and polycarboxylic acids and anhydrides such as maleic acid and anhydride, fumaric acid, crotonic acid and anhydride, propenyl succinic anhydride, acrylic acid, acryloyl chloride, hydroxy ethyl acrylate or methacrylate and halogenated maleic acids and anhydrides, unsaturated polyhydric alcohols such as 2-butene-1,4-diol, glycerol allyl ether, trimethylolpropane allyl ether, pentaerythritol allyl ether, pentaerythritol vinyl ether, pentaerythritol diallyl ether, pentaerythritol vinyl ether, pentaerythritol diallyl ether, and 1-butene-3,4-diol, unsaturated epoxides such as 1-vinyl-cyclohexene-3,4-epoxide, butadiene monoxide, vinyl glycidyl ether(1-vinyloxy-2,3-epoxy propane), glycidyl methacrylate and 3-allyloxypropylene oxide (allyl glycidyl ether). If a polycarboxylic acid or anhydride is employed to incorporate unsaturation into the polyols, it is preferable to react the unsaturated polyol with an alkylene oxide, preferably ethylene or propylene oxide, to replace the carboxyl groups with hydroxyl groups prior to employment in the present invention. The amount of alkylene oxide employed is such as to reduce the acid number of the unsaturated polyol to about 5 or less.

Illustrative polymerization initiators which may be employed are the well-known free radical types of vinyl polymerization initiators such as the peroxides, persulfates, perborates, percarbonates, azo compounds, etc. These include hydrogen peroxide, dibenzoyl peroxide, acetyl peroxide, benzoyl hydroperoxide, t-butyl hydroperoxide, di-t-butyl peroxide, lauroyl peroxide, butyryl peroxide, diisopropylbenzene hydroperoxide, cumene hydroperoxide, paramenthane hydroperoxide, diacetyl peroxide, di-α-cumyl peroxide, dipropyl peroxide, diisopropyl peroxide, isopropyl-t-butyl peroxide, butyl-t-butyl peroxide, difuroyl peroxide, bis(triphenylmethyl) peroxide, bis(p-methoxybenzoyl) peroxide, p-monomethoxybenzoyl peroxide, rubene peroxide, ascaridol, t-butyl peroxybenzoate, diethyl peroxyterephthalate, propyl hydroperoxide, isopropyl hydroperoxide, n-butyl hydroperoxide, t-butyl hydroperoxide, cyclohexyl hydroperoxide, trans-decalin hydroperoxide, α-methylbenzyl hydroperoxide, α-methyl-α-ethyl benzyl hydroperoxide, tetralin hydroperoxide, triphenylmethyl hydroperoxide, diphenylmethyl hydroperoxide, α,α'-azobis-(2-methyl heptonitrile), 1,1'-azo-bis(cyclohexane carbonitrile), 4,4'-azobis(4-cyanopentanoic acid), 2,2'-azobis(isobutyronitrile), 1-t-butylazo-1-cyanocyclohexane, persuccinic acid, diisopropyl peroxy dicarbonate, 2,2'-azobis(2,4-dimethylvaleronitrile), 2-t-butylazo-2-cyano-4-methoxy-4-methylpentane, 2,2'-azobis-2-methylbutanenitrile, 2-t-butylazo-2-cyanobutane, 1-t-amylazo-1-cyanocyclohexane, 2,2'-azobis(2,4-dimethyl-4-methoxyvaleronitrile, 2,2'-azobis-2-methylbutyronitrile, 2-t-butylazo-2-cyano-4-methylpentane, 2-t-butylazo-2-isocutyronitrile, to butylperoxyisopropyl carbonate and the like; a mixture of initiators may also be used. The preferred initiators are 2,2'-azobis(2-methylbutyronitrile), 2,2'-azobis(isobutyronitrile), 2,2'-azobis(2,4-dimethylvaleronitrile), 2-t-butylazo-2-cyano-4-methoxy-4-methylpentane, 2-t-butylazo-2-cyano-4-methylpentane, 2-t-butylazo-2-cyano-butane and lauroyl peroxide. Generally, from about 0.1 percent to about 10 percent, preferably from about 1 percent to about 4 percent, by weight of initiator based on the weight of the monomer will be employed in the process of the invention.

A particularly preferred polyol for use in the instant invention will be a graft polyol having from 5 to 60 percent vinyl, the monomer being comprised of a mixture of acrylonitrile and styrene, in a carrier polyol having a number average molecular weight of from 2000 to 10,000. The carrier polyol will preferably have a trifunctional initiator and contain at least 5 percent ethylene oxide, most preferably a 5 to 60 % EO. However, it will be appreciated that while not preferred, the use of carrier polyols having no EO is within the scope of the invention.

A most preferred graft polyol will have from 10 to 50 % of a mixture of acrylonitrile and styrene in a carrier polyol having an initiator selected from the group consisting of trimethylolpropane and glycerine, and a number average molecular weight of from 3000 to 7000. The carrier polyol will preferably contain 10 to 30 % EO.

As indicated above, the polyol component will usually also contain a urethane promoting catalyst and a blowing agent.

Any suitable urethane promoting catalyst may be used including tertiary amines such as, for example, triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'-trimethylisopropyl propylenediamine, 3-diethylaminopropyldiethylamine, dimethylbenzylamine, and the like. Other suitable catalysts are, for example, stannous chloride, dibutyltin di-2-ethyl hexanoate, stannous oxide, as well as other organometallic compounds such as are disclosed in U.S. Pat. No. 2,846,408.

Suitable blowing agents include water, chemically inert, low boiling, hydrocarbons and halogenated hydrocarbons and mixtures thereof. Examples of the later include those having boiling points below 50 degrees C and preferably between -50 C and 30 C at atmospheric pressure.

Illustrative examples of suitable blowing agents are halogenated hydrocarbons such as monochlorodifluoromethane, dichloromonofluoromethane, dichlorofluoromethane, and trichlorofluoromethane and their mixtures, and hydrocarbons such as propane, n-butane, and isobutane as well as dimethyl ether and cyclopentane, acetone and formic acid.

However, in general, water is the most preferred blowing agent for use with the instant invention.

In any case, it is necessary that the blowing agent be present in an amount sufficient to be responsible, at a minimum, for at least 95 percent of the expansion of the polyurethane foam. However, it is preferred that the blowing agent be responsible for essentially all or at least 98 percent of the expansion of the foam. Most preferably, the blowing agent will be responsible for 100 percent of the expansion of the foam.

In any event, no expansion of the foam should be the result of the inert gas injected into the component streams. Those skilled in the art will appreciate that the required quantities of blowing agent can be determined experimentally as a function of the desired density and amount of the foam.

As indicated above, optional elements or additives of the polyol component stream can include surfactants, chain extenders, flame-inhibitors, antioxidants, inorganic and organic acids, organic fillers, pigments and colorants, antistatic additives and mixtures thereof.

Chain-extending agents which may be employed in the preparation of the polyurethane foams include those compounds having at least two functional groups bearing active hydrogen atoms such as water, hydrazine, primary and secondary diamines, amino alcohols, amino acids, hydroxy acids, glycols, or mixtures thereof. Such agents will generally have a number average molecular weight of less than about 400. A preferred group of chain-extending agents includes water, ethylene glycol, 1,4-butanediol and primary and secondary diamines which react more readily with the prepolymer than does water such as phenylene diamine, 1,4-cyclohexane-bis-(methylamine), ethylenediamine, diethylenetriamine, N-(2-hydroxypropyl)ethylenediamine, N,N'-di(2-hydroxypropyl)ethylenediamine, piperazine, and 2-methylpiperazine.

A surface-active agent is generally necessary for production of high grade polyurethane foam according to the present invention, since in the absence of same, the foams generally collapse or contain very large uneven cells. Numerous surface-active agents have been found satisfactory. Nonionic surface-active agents are preferred. Of these, the nonionic surface-active agents such as the well-known silicones have been found particularly desirable. Other surface-active agents which are operative, although not preferred, include paraffin oils, castor oil, turkey red oil, polyethylene glycol ethers of long chain alcohols, tertiary amine or alkanolamine salts of long chain alkyl acid sulfate esters, alkyl sulfonic esters, and alkyl arylsulfonic acids.

Among the flame retardants which may be employed are pentabromodiphenyl oxide, dibromopropanol, tris(β-chloropropyl)phosphate, 2,2-bis(bromoethyl) 1,3-propanediol, tetrakis(2-chloroethyl)ethylene diphosphate, tris(2,3-dibromopropyl)phosphate, tris(β-chloroethyl)phosphate, tris(1,2-dichloropropyl)phosphate, bis-(2-chloroethyl) 2-chloroethylphosphonate, molybdenum trioxide, ammonium molybdate, ammonium phosphate, pentabromodiphenyloxide, tricresyl phosphate, hexabromocyclododecane, melamine, and dibromoethyl- dibromocyclohexane. The concentrations of flame retardant compounds which may be employed range from 1 to 100 parts per 100 parts of polyol mixture.

The isocyanate and polyol containing component streams will generally be introduced into polyurethane foam making machine such as are well known to those skilled in the art. Machines particularly suited to the production of flexible polyurethane slabstock foam are particularly preferred. Illustrative examples are the M-30 Lab Machine and the Hennecke UBT-63. Through machines are well-known in the art and are described, for example, in U.S. Patent 4,074,960 and 4,298,557.

The inert gas to be injected into the isocyanate and polyol containing component streams will generally be of a type which will not react with the polyurethane components, such as inert gases or noble gases. Illustrative examples include air, carbon dioxide, nitrogen, or argon. Preferred gases are carbon dioxide and nitrogen. Carbon dioxide is most preferred.

The amount of inert gas to be injected will be incapable of producing any measurable expansion of the flexible polyurethane slabstock foam. That is, the amount injected should be capable of producing only negligible expansion of the foam, if any.

The inert gas may be injected into one or both of the component streams. In general, the gas will be injected into that component stream which exhibits the greatest solubility for a particular gas. The gas may also be injected into the combined streams of components.

In general, the amount of inert gas to be injected will be 0.0010-1.0 weight percentage of the selected component stream. Injection into isocyanate stream is most preferred. For example, it is preferred to have inert gas injected at 0.0050-0.750 weight percent of the isocyanate component stream. Most preferably, inert gas will be injected at an amount of 0.010-0.50 weight percentage of the isocyanate. The isocyanate amount will be based upon 100 parts by weight of the polyol component stream.

The location of injection will vary depending on a variety of factors such as machine type, metering and mixing equipment, polyol selection and isocyanate selection. In general, the gas will be injected into the selected stream at a location facilitated by the machine design. Examples of suitable injection locations include the component manifold on a pour head, the suction side of a high shear or homogenizing pump inline with the polyol stream, and the suction side of a high pressure polyol and/or isocyanate pump. In general, the inert gas is injected with the aid of a hypodermic needle, such as an 18 gauge No. 2 point type.

The solubility of the inert gas in the selected component stream or streams may be effected by a variety of factors. Generally, it is desirable to increase the solubility of the inert gas in the selected component stream(s).

It has been found that factors such as component stream pressures and temperatures, inert gas pressure and temperature, head pressure and mixer speed may play a role in the effectiveness of the injected inert gas and thus on the final characteristics of the resulting foam. Component and gas pressures and temperatures will generally depend on the identity of the particular component or gas used, as well as the type of foam production equipment utilized.

Similarly, the selection of an optimum head pressure and mixer speed will also depend on the same factors. However, as demonstrated in the following working examples, it may be stated that head pressure should be maintained at a range of between 5 to 30 psig. Increasing the mixer speed was also found to have a desirable effect on the final foam obtained. Those skilled in the art, however, will appreciate that head pressure and amount of mixed speed are related.

Those skilled in the art will appreciate that ultimately, either before or after the injection of the inert gas, the isocyanate and polyol containing component streams will be brought together so as to facilitate a reaction therebetween. The length of reaction time will depend on the selection of the particular components selected and the foam production equipment utilized. However, illustrative free rise reaction times with respect to typical slabstock dispensing equipment are 12 to 20 seconds for cream time and approximately 1 to 3 minutes for rise time.

Flexible polyurethane slabstock foams produced according to the invention exhibit an optimum combination of feel, comfort and wear characteristics. It is believed that these attributes will be possessed by foams having (a.) a particular cell size distribution, (b.) a particular catastrophic fatigue value, and (c.) a particular visual appearance.

While not wishing to be bound to a particular theory, it is believed that cell size distribution is particularly relevant to the achievement of optimum comfort and wear characteristics in flexible polyurethane slabstock foams.

Cell size distribution is intended to refer to both the size of the cells and the number of each size of cell present in a cross section of the foam. Terms such as fine and coarse represent the ends of a spectrum which generally relates to the size of the cells, while random and uniform often refer to the end points of a spectrum referring to the number of certain sized cells present in a cross section of the foam. Those skilled in the art will appreciate, however, that with respect to cell size, the particular numbers may be somewhat dependent upon foam type and composition. In general, fine cells are preferred over coarse cells when optimization of performance properties such as fatigue, tensile strength, tear strength, elongation and support factor are desired.

With respect to the most preferred foams of the invention, fine cells may be defined as those having a maximum diameter of 1.0 mm, while coarse cells can loosely be termed as those having a diameter greater than the maximum diameter for fine cells.

Random cell structures will be those wherein no one cell size range (ie., cells having a diameter which is within + or - 100% of the average cell diameter) constitutes a majority of all visible cells in a cross section of the foam. Uniform cell structures will be those wherein a majority of the visible cells are within a particular cell size range. It is currently believed that optimum wear characteristics are obtained with random structures.

However, while foams which may be characterized as both fine and random are believed to be preferred, it is possible that a foam capable of only one such characterization may exhibit the superior properties of the claimed polyurethane slabstock foam.

Desirable foams will generally be those having a cell structure such that at least 10% and preferably 20%, of the cells visible in a cross section of the foam are within a common cell size range. Preferably, said 10% of cells will have a diameter of at least 0.1 mm.

More particularly, with respect to the most preferred foam of the invention, it is believed that in general, at least 90 percent of the cells present in a cross section of the foam should have a diameter between 0.1 and 1.0 mm. Preferably at least 75 percent of the cells will have a diameter between 0.2 and 0.8 mm. Most preferably, at least 40 percent of the cells will have a diameter between 0.3 and 0.6 mm.

Determination of cell size distribution may be done either manually with a stereo microscope and a grid or instrumentally using a computerized video imaging and automated cell counting system. Cell size counts may be given as cells per inch (cpi) or as a measurement of cell size diameter in millimeters.

Optimum wear characteristics are exemplified by certain catastrophic fatigue values. As used herein, catastrophic fatigue is defined by two testing parameters, both resulting from ASTM test D3574(40k cycles, no carpet). First, the percent loss in height is measured. It should be no more than 10%, with less than 5% lost being preferred, and less than 2% lost being most preferred. Second, the % hardness retained at 65% IFD deflection should be at least 50%, with at least 60% being preferred and at least 65% being most preferred.

Finally, the performance and comfort characteristic are also influenced by the visual appearance of the foam. That is, the foam should be substantially free of large voids, which may be classified by the size of their diameters. As indicated previously, voids having diameters of from 1mm to 3mm are defined as buckshot, while voids having diameters of from 3mm to 6mm are peaholes. It is desirable that the foam be substantially free of peaholes. By "substantially free" it is meant that the foam have no more than 1 to 2 peaholes per square meter.

The invention is further illustrated, but is not intended to be limited by the following examples in which all parts and percentages are by weight unless otherwise specified.

### Example

The following materials were used in the examples below:
Polyol A is a graft polyol commercially available from BASF Corporation of Wyandotte, Michigan, PLURACOL® Polyol 1231
Diethanolamine LF is a produce of VAN WATER & ROGERS Inc.
DC-5164 Silicone surfactant is a product of AIR PRODUCTS
DABCO® 33LV Catalyst is a product of AIR PRODUCTS
DABCO® T-12 Catalyst is a product of AIR PRODUCTS
ANTIBLAZE® 100 is a product of ALBRIGHT & WILSON
Isocyanate B is a mixed isocyanate commercially available as LUBRANATE® No. 236 ISO from BASF Corporation.

All urethane components were metered in separate streams into a pin-mixer type low pressure pour-head which then dispensed the reacting mixture onto a moving conveyor. The dispensed liquid mixture at a prescribed time began to cream then expand, shaped by the moving conveyor and static side walls. This continuous reacting foaming operation was allowed to run until a 15-foot block of foam was made. The foam block was allowed to cure for minimum 72 hours at ambient conditions after which standard test pads were cut for physical property testing.

Foam blocks were prepared with Polyol A and Isocyanate B at 110 index using a 2.1 pbw water formulation and related ancillary components are listed in Table 1:

**TABLE 1**

| FORMULATION, pbw | 1 | 2 | 3 |
|---|---|---|---|
| Polyol A | 100.0 | 100.0 | 100.0 |
| Water Added | 2.1 | 2.1 | 2.1 |
| Diethanolamine LF | 0.7 | 0.7 | 0.7 |
| DC-5164 Surfactant | 1.5 | 1.5 | 1.5 |
| DABCO® 33LV | 0.15 | 0.15 | 0.15 |
| DABCO® T-12 | 0.1 | 0.1 | 0.1 |
| ANTIBLAZE® 100 | 3.0 | 3.0 | 3.0 |
| Isocyanate B (110 Index) | 40.5 | 40.5 | 40.5 |

| PROCESSING CONDITIONS | | | |
|---|---|---|---|
| Injection Point | Isocyanate ------------> | | |
| Nucleating Gas Type | N₂ | CO₂ | CO₂ |
| Gas Flow Rate, L/min. | 3.4 | 3.2 | 4.0 |
| Gas Temperature, °F | 71 | 71 | 71 |
| Gas Pressure, psig | 10 | 10 | 20 |
| Wt. of gas in iso stream, % | 0.05 | 0.07 | 0.12 |
| Pour Head Pres., psig | 10 | 10 | 7 |
| Iso Inject. Pres., psig | 400 | 500 | 500 |

| FOAM PROPERTIES | | | |
|---|---|---|---|
| Density, PCF | 3.1 | 2.9 | 3.1 |
| IFD, lbs | 91 | 129 | 116 |
| Support Factor | 2.45 | 2.07 | 2.48 |
| Air Flow, CFM | 0.4 | 0.2 | 0.4 |

| Catastrophic Fatigue | | | |
|---|---|---|---|
| 40k cycles no carpet | 1.3 | 8.4 | 1.8 |
| Height, % loss | | | |
| 65% IFD% hard. Retained | 81.5 | 38.5 | 80.7 |

| Cell Analysis* Visual Description | | | |
|---|---|---|---|
| Cell Size | Random | Uniform | Random |
| Pore Appearance | Irregular | Spherical | Irregular |
| Average Cell Diameter, mm | 0.42 | 0.46 | 0.45 |
| Cell Diameter Range, mm | 0.14-0.75 | 0.30-0.60 | 0.18-0.95 |
| Cell Count Per Inch | 75-70 | 63-58 | 73-68 |

| | | | |
|---|---|---|---|
| *Cell measurements made with RAM Optic apparatus. | | | |

Comparing formulation 1 with 3 indicated that foams nucleated with either N₂ or CO₂ gave a similar cell pattern and fatigue properties. The fatigue performance of formulation 3 was improved over formulation 2 due to increased concentration of CO₂ in the isocyanate stream and lower pour-head pressure. The foam produced with formulation 3 with CO₂ nucleating gas had significantly reduced number of defects in comparison with the one produced with formulation 1 using N₂ gas. Photographs of these foams at 23x magnification are attached as Figures 1, 2, and 3. Figure 1 illustrates foam 1 with defects, Figure 2 illustrates foam 2 without defects and Figure 3 illustrates foam 3 without defects.

It should be understood that while the invention as shown and described herein illustrates currently preferred embodiments of the invention, it is not intended to illustrate all possible forms thereof.

A variety of polyurethane foams can be created by one of ordinary skill in the art without departing from the spirit and scope of the invention disclosed and claimed.

## Claims

1. A process of making a flexible polyurethane slabstock foam having superior feel, comfort, and wear characteristics, the process of making comprising:
providing a stream of an isocyanate containing component
providing a stream of a polyol containing component having a blowing agent which is responsible for at least 95 percent of the expansion of the foam;
injecting an amount of an inert gas into one or more of the isocyanate or polyol containing component streams, the amount injected being capable of producing only negligible expansion of the foam; and
reacting the steams together for a time sufficient to produce a polyurethane foam;
wherein the resulting polyurethane slabstock foam is characterized by
(a.) a cell size distribution wherein at least 20 percent of the cells visible in a cross section of the foam have a diameter of at least 0.1mm; and
(b.) a substantial absence of cells having a diameter which is at least four times greater than the common cell size diameter.

2. The process of claim 1 wherein the step of providing an isocyanate stream further comprises providing an isocyanate comprising
(i) diphenylmethane diisocyanate isomers;
(ii) modified isocyanates containing uretoneimine-carbodiimide, allophanate, and/or isocyanaurate structures; and
(iii) toluene diisocyanate.

3. The process of claim 2 wherein the step of providing an isocyanate stream further comprises providing an isocyanate consisting essentially of
(i) 20 to 95 weight percent 4,4-diphenylmethane diisocyanate;
(ii) 1 to 60 weight percent modified isocyanate containing uretoneimine-carbodiimide, allophanate, and/or isocyanaurate structures; and
(iii) 1 to 60 weight percent toluene diisocyanate.

4. The process of claim 1 wherein the step of providing a polyol containing stream further comprises providing a blend of:
(i) a polyol comprising a graft polyol;
(ii) a urethane promoting catalyst;
(iii) a blowing agent responsible for 100 percent of the expansion of the foam which comprises carbon dioxide generated in situ; and
(iv) one or more additives selected from the group consisting of surfactants, chain extenders, flame inhibitors, anitoxidants, and mixtures thereof.

5. The process of claim 4 wherein the step of providing a polyol containing stream further comprises providing a blend of:
(i) a graft polyol having from 5 to 60 percent vinyl monomer selected from the group consisting of acrylonitrile, styrene, and mixtures thereof, the vinyl monomer being in a carrier polyol having a number average molecular weight of 2000 to 1000.

6. The process of claim 1 wherein the step of injecting further comprises injecting from 0.0010 to 1.0 weight percent of an inert gas into the selected component stream.

7. The process of claim 1 wherein the step of injecting further comprises injecting carbon dioxide into the isocyanate stream.

8. The process of claim 7 wherein the step of injecting further comprises injecting 0.0050 to 0.750 weight percent carbon dioxide into the isocyanate stream, as based on the total weight of the isocyanate stream.

9. The process of claim 1 wherein the foam is further characterized by a cell size distribution wherein at least 90 percent of the cells visible in a cross section of the foam have a diameter between 0.1mm and 1.0mm.

10. The process of claim 1 wherein the foam is further characterized by a substantial absence of cells having a diameter which is at least three times greater than the common cell size diameter.

11. The process of claim 1 wherein the foam is further characterized by (c.) a catastrophic fatigue value characterized by (1.) a percent loss in height of no more than 10%, and (2.) a percent hardness retained (65% IFD deflection of no less than 50%.

12. The process of claim 11 wherein the foam is further characterized by a catastrophic fatigue value characterized by (1.) a percent loss in height of less than 5%, and (2.) a percent hardness retained (65% IFD deflection of at least 60%.

13. A method of reducing the number of defects having an average diameter of at least 1mm in a flexible, low density slabstock polyurethane foam, the method comprising:
providing a stream of an isocyanate containing component;
providing a stream of a polyol containing component having a blowing agent which is responsible for at least 95 percent of the expansion of the foam;
injection an amount of an inert gas into one or more of the isocyanate or polyol component stream, the amount being capable of producing only negligible expansion of the foam; and
reacting the streams together for a time sufficient to produce a polyurethane foam.

14. A flexible polyurethane slabstock foam having superior feel, comfort, and wear characteristics, obtainable by a process as claimed in claim 1.
